# EUROPEAN PATENT APPLICATION

(11) **EP 3 875 813 A1**
(43) Date of publication of application: **08.09.2021**
(21) Application number: 20160846.0
(22) Date of filing: 04.03.2020
(51) Int. Cl.: F16K 1/52, F16K 15/18, F16K 5/04, F16K 15/02, F16K 5/10

(54) **A 180-DEGREE CONTROLLABE AND REVERSIBLE FLOW CHECK VALVE**

(71) Applicant: Uzun, Emrullah, Cigli, Izmir (TR)
(72) Inventor: Uzun, Emrullah, Cigli, Izmir (TR)
(74) Representative: Atalay, Baris

(57) **Abstract**

A 180-degree controllable check valve comprising a valve body (11) with a two-level fluid passageway, housing a rotatable clapper body (13) and a piston (17) drivably positioned within said rotatable clapper body (13) characterized in that; said rotatable clapper body (13) further comprises two layered chambers connected with a passage to establish connection with the opposite levels of said two-level fluid passageway; and, said piston (17) further comprises at least one cavity whereby fluid delivery between said two levels of the passageway is facilitated or cut off.

## Description

### Technical Field of the Present Invention

The invention presented hereby generally concerns devices that control direction of fluid movement in piping systems. Disclosed invention more specifically concerns the technical area of bidirectional check valves that are used for enabling fluids to move in either direction within a given section of a piping system.

### Background of the Present Invention

Devices and apparatuses for controlling liquid flow rate and direction in liquid delivery systems in general are well documented, among which check valves comprising clapper mechanisms for blocking fluid movement in one direction while permitting in another are found. In certain applications, designs tend to be bulky and operationally limited, as mechanisms become more complicated with smaller body-to-flow ratios. Moreover, clapper mechanisms and ball check valves need to be versatile for different piping configurations and fluid storage requirements.

Publication with number US 4969484 (A) discloses a reversible flow check valve with a valve body and a clapper extending a flow passageway. A mechanism is provided to retract the clapper to allow essentially unobstructed fluid flow through the flow passageway. The mechanisms are provided for rotating the clapper of a first position or an opposite second position or an intermediate position to permit fluid flow in either direction. The retraction of the clapper permits the valve sears and seals to be unaffected by the rotation of the clapper, thereby preventing damage to the internal sealing mechanisms of the valve when the flow direction is reversed.

Patent with number US 8584705 (B2) discloses an apparatus for controlling the flow of fluid comprising a main passageway for conducting the fluid and the valve that includes a rotatable cavity that has a ball check. Rotatable cavity is rotatable with respect to the main passageway to provide at least three positions including a bypass position, a closed position and a run position.

Another document US 3851665 (A) discloses a double check valve that comprises the following: A body having a bore with offset lateral inlet and outlet connections; a hollow plug divided internally by tandem valve seats into lower, middle and upper chambers; a pair of tandem check valves co-axially mounted in said plug to be lightly spring biased downwardly respectively into closed relation with said valve seats, primary and secondary passageways in said plug communicating respectively (with said plug in open position) between said upper chamber and said outlet connection and between said lower chamber and said inlet connection, imperforate areas on said plug being disposed opposite said inlet and outlet connections, when said plug is in closed position, thereby halting a flow of liquid from said inlet connection to said outlet connection. Drain petcocks are provided in the valve body, opening respectively into the inlet and outlet connections to drain water from either the house or service main side of the valve. When the plug is in closed position, three outlets are set up respectively from said three chambers to petcocks for periodic testing of each check valve or to drain each chamber. When the plug is in closed position it allows for disassembly of the moving parts of the check valves for repair by relocating two lock screws to unlock the wrench key head of the plug allowing it to be removed and to lock the plug in closed position while the valves are worked.

Yet another document, CN 107917233 (A) discloses a T-shaped three-channel reversing and automatic non-return plunger valve that comprises a valve body; a plunger body and a valve bottom plate. The valve body is of a T-shaped tee-joint structure, whereas the valve body is composed of a first channel, a second channel, a third channel and a cylinder body, the plunger body is of a cylindrical structure, a T-shaped channel is formed in the radial direction of the plunger body, channel openings of T-shaped channel of the plunger body are communicated with any three or two channels of the first channel, the second channel and the third channel, the valve bottom plate is fixedly mounted at the bottom of the valve body, a cylindrical guide sleeve is arranged on the top of the valve bottom plate, a bearing rod is arranged at one end of the plunger body, the bearing rod is sleeved with the guide sleeve, a containing space is arranged between the plunger and the valve bottom plate, and the first channel, the second channel and the third channel are communicated with the containing space through feedback pipelines.

### Objects of the Present Invention

Primary object of the disclosed invention is to present a bidirectional stop check valve.

Another object of the disclosed invention is to present a stop check valve that is capable of offering a 180-degrees reversible flow.

Another object of the disclosed invention is to present a device comprising concentric flow manipulation means to increase effectiveness of flow direction control.

Yet another object of the disclosed invention is to present a device comprising concentric flow manipulation means to offer a synergistically operable flow direction control paradigm.

### Summary of the Present Invention

According to the disclosed invention, a bidirectional stop check valve that is capable of flow manipulation and control in opposite directions, also offering the ability to maintain a desired and steady flow rate in either direction effectively is proposed.

Disclosed invention is based on a compact, robust and straightforward design that improves the versatility and efficiency of technical solutions that follow a general approach in the art. Valve body that comprises multliple interdependent parts serves as a fluid containment space, wherein two concentric parts, namely a plug and a piston, are able to be operated harmoniously to achieve a desired liquid flow state. Said plug, which is essentially a rotating clapper body comprises a fluid corridor of s-shaped design, houses a piston which is essentially a clapper that prevents fluid flow in the opposite direction by its spatial relationship to said plug. According to an embodiment, when said piston is horizontally moved downwards via a flow calibration/adjustment means, cross-section of the profile is decreased, therefore a less rapid flow is ensured. When said piston is moved downwards to its lowest possible position, flow is cut off completely.

Disclosed invention also offers the identical effect via rotating the plug with respect to the piston/clapper part, such that its s-shaped corridor is perpendicularly positioned with respect to the possible directions of fluid movement. Having concentric structural elements that could be actuated independently with their respective rotation/calibration means, said system offers a versatile extension of functionality next to the established solutions in the art which include conventional approaches of stop check valves either acting as a globe valve for isolating or controlling flow rate or a check valve preventing reverse flow.

### Brief Description of the Figures of the Present Invention

Accompanying figures are given solely for the purpose of exemplifying a flow rate controlling bidirectional stop check valve, whose advantages over prior art were outlined above and will be explained in brief herei nafter.

The figures are not meant to delimit the scope of protection as identified in the claims nor should they be referred to alone in an effort to interpret the scope identified in said claims without recourse to the technical disclosure in the description of the present invention.

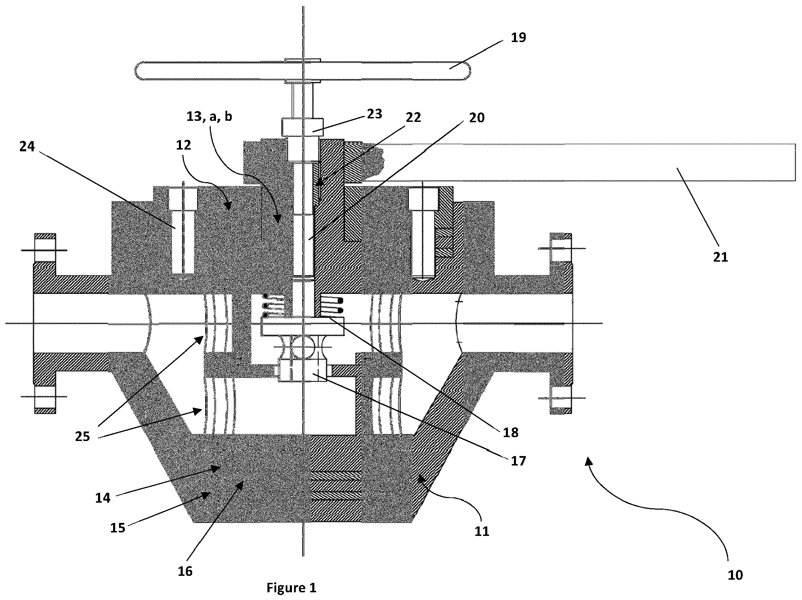

Fig. 1 demonstrates the length cross-section of the bidirectional check valve according to the disclosed invention.

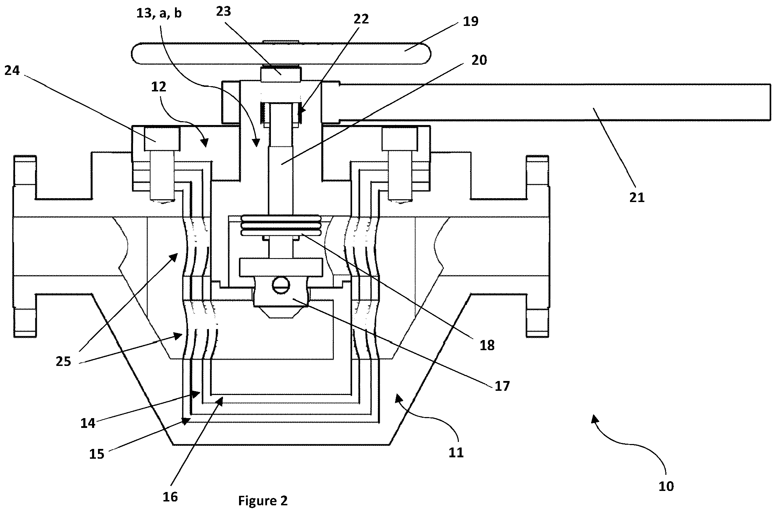

Fig. 2 demonstrates the length cutaway view of the bidirectional check valve according to the disclosed invention.

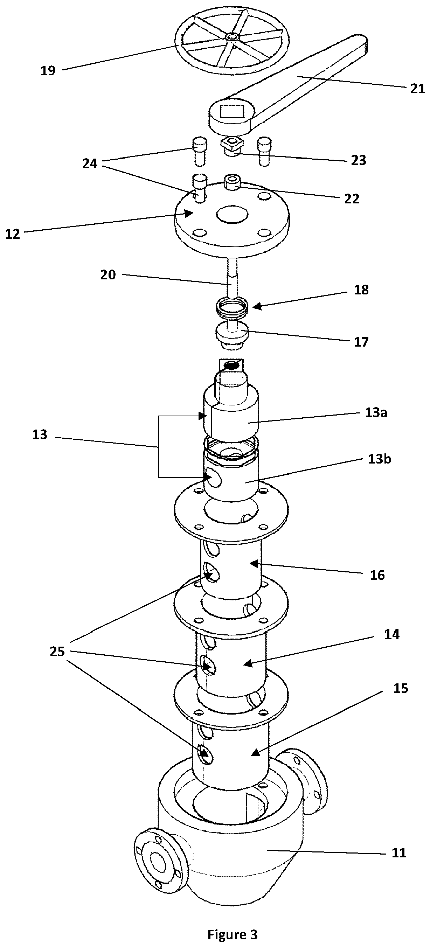

Fig. 3 demonstrates the exploded isometric view of the bidirectional check valve according to the disclosed invention.

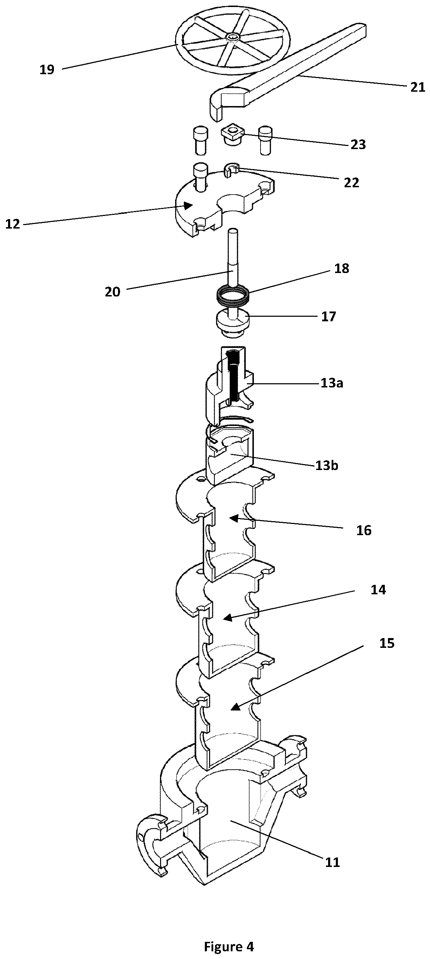

Fig. 4 demonstrates the exploded isometric cutaway view of the bidirectional check valve according to the disclosed invention.

### Detailed Description of the Present Invention

- 10): Bidirectional check valve
- 11): Valve body
- 12): Body cap
- 13): Rotating clapper body (plug)
- 13a): Upper plug portion
- 13b): Lower plug portion
- 14): Sleeve
- 15): Sleeve seal
- 16): Plug seal
- 17): Piston
- 18): Piston spring
- 19): Flow adjustment means
- 20): Flow adjustment screw
- 21): Plug rotation means
- 22): Gasket
- 23): Gasket nut
- 24): Cap bolt
- 25): Flow gate

Disclosed invention proposes a bidirectional check valve (10) capable of flow manipulation and control in opposite directions, also capable of maintaining a desired and steady flow rate in either direction effectively, while retaining the ability to act as a stop valve.

Disclosed invention is centered around a compact and straightforward design that improves the versatility and efficiency of technical solutions that follow a general approach in the art. Valve body (11) that comprises multliple interdependent parts serve as a fluid containment space, wherein two concentric parts, namely a plug (13) and a piston (17), are 7

able to be operated harmoniously to achieve a desired liquid flow state. Said plug (13), which is essentially a rotating clapper body comprises a fluid corridor of double-layered design, houses a piston (17) which is analogous to a clapper that prevents fluid flow in the opposite direction by its spatial relationship to said plug (13). According to an embodiment, when said piston (17) is horizontally moved downwards via a flow calibration/adjustment means (19), cross-section of the profile is decreased, therefore a less rapid flow is ensured. When said piston (17) is moved downwards to its lowest possible position, flow is cut off completely. In that position, according to an embodiment, piston spring (18) facilitates retention of the downwardmost position of said piston (17).

Disclosed invention also offers the identical effect via rotating the plug (13) with respect to the piston/clapper part, such that its double-layered corridor is perpendicularly positioned with respect to the possible directions of fluid movement. Having concentric structural elements that could be actuated independently with their respective rotation/calibration means, said system offers a versatile extension of functionality next to the established solutions in the art which include conventional approaches of stop check valves either acting as a globe valve for isolating or controlling flow rate or a check valve for preventing reverse flow.

According to an embodiment of the disclosed invention, whenever a piping system or configuration utilizes disclosed device; problem of check valves in the art not allowing flow in an opposite direction is solved. In an embodiment, between different piping system elements or modules, the same pipe path could be utilized for both directions e.g. filling and emptying a certain container; delivering fluids of different character between different points in the system etc. These cases require two different fluid delivery paths (pipelines) to operate on said conditions, or to accomplish similar tasks in the art.

According to the 180-degree reversible, flow controlling stop check valve as put forth in the disclosed invention, tasks such as filling and emptying storage units e.g. tanks, silos etc. could be realized on one fluid delivery path; in that, no drastic structural alterations need to be made other than actuation and/or rotation of related parts on the bidirectional stop check valve. One of such parts is the flow adjustment means (19) which, along with a pitched element of flow adjustment screw (20) changes the horizontal position of the piston (17) which comprises at least one cavity for fluid to pass through. According to an embodiment, said piston (17) comprises two cavities that crisscross through its body and exit on opposite sides. According to an embodiment, said two cavities are directionwise perpendicularly drilled.

According to an embodiment of the 180-degree reversible, flow controlling stop check valve as put forth in the disclosed invention, said bidirectional check valve (10) comprises a valve body (11) that is characterized by two ends connectible to other piping elements of a piping system, and a central portion incrementally doubling in height equivalent to the size of two pipes stacked on top of one another. According to an embodiment, said incremental doubling in height of said central portion of the valve body (11) takes place in a downward slope. In fully assembled form of said bidirectional check valve (10), valve body (11) is closed with a body cap (12) that ensures the confinement of fluid within the space designated by said valve body (11); next to keeping other parts comprised thereby intact.

180-degree reversible, flow controlling stop check valve as put forth in the disclosed invention comprises a rotating clapper body, also referred to as plug (13), that is designed in a double-chambered fashion, profile of which resembles an s-shape. Said double chambers found in the plug (13) situated in the valve body (11) under the body cap (12) have opposite openings, i.e. one opening faces one end of said valve body (1) while one other opening faces the other end. According to an embodiment, said plug (13) have an upper portion (13a) and a lower portion (13b) which, when conjoined, make up said double-chambered structure. In one embodiment, one of said plug (13) openings stay level with the valve body (11) while the opposite opening faces the bottom of the sloped-down central portion of valve body (11). Preferably, said piston (17) is movably positioned in the upper portion (13a) comprising the upper chamber of said plug (13), with a piston spring (18) positioned between the roof of said upper chamber and the top surface of said piston (17). In an embodiment, there exists a cavity between said lower portion (13b) and said upper portion (13a) of said plug (13) for a piston (17) to fit comfortably and rotatably therein.

According to one embodiment of the disclosed invention, said valve body (11) comprises a space for a comfortable and rotatable fit of said plug (13) therewithin. Said space is designated with one sleeve (14) that is sandwiched between one sleeve seal (15) contacting the valve body (11) and one plug seal (16) contacting said plug (13). According to an embodiment, said plug (13) is separated from the valve body (11) via the multiplicity of two plugs and a sleeve; which comprise holes that serve as flow gates (25). According to one embodiment, said flow gates (25) are positioned on the sandwiched seal-sleeve-seal layers in such a way that they coincide perfectly, or at least substantially with the openings of chambers found in said plug (13). When said plug (13) is rotated in one parallel position, one reciprocal flow gate (25) pair (e.g. one top, one bottom) will allow fluid to be delivered in and out of the plug (3), and for the opposite flow direction, the same effect will be achieved when said plug (13) is rotated in the other parallel position and the other reciprocal flow gate pair is engaged. According to one embodiment, said sleeve seal (15) facing the valve body (11) is held to said sleeve (14) with an adhesive. According to one embodiment, said plug seal (16) is also held to said sleeve (14) on its respective surface.

According to one embodiment of the disclosed invention, the outside surface of said plug (13) is in contact with the plug seal (16), the opposite surface of which is in contact with the sleeve (14), and as such, is rotatable. Said plug therefore rotatably fits inside the space as mentioned above, and extends upwards from the body cap (12) to establish connection with a means to rotate said plug (13). Upwards-extending body of said plug (13) is connected to a plug rotation means (21) that, according to one embodiment, is a rod conveniently rotating said plug (13) whenever a suitable magnitude of torque is applied. Said plug rotation means (10) could be elongated or shortened for different designs so as to facilitate the rotation process of said plug (13). Said plug rotation means (21) is, according to an embodiment, confined to the circumference of the outer protruding portion of said plug (13) extending outwards from the body cap (12).

According to an embodiment, said plug (13) is of a two-piece structure, in that it comprises an upper portion (13a) and a lower portion (13b). Said lower portion (13b) of said plug (13) houses the lower of the two chambers, whereas said upper portion (13a) of said plug (13) houses the upper of the two chambers. Said upper portion also comprises the extension that extends upwards from the body cap (12) as mentioned earlier. According to an embodiment, said lower portion (13b) and upper portion (13a) are joined together once the piston (17) and the piston spring (18) are inserted to the predefined position situated therebetween.

According to an embodiment, part of said plug (13) extending outwards from said body cap (12) covering said valve body (11) is tubular and comprises a pitched cavity. Said pitched cavity is suitable for inserting a screw for rotating the piston (17) that is found inside the top chamber of the two-chamber structure of said plug (13). Screw inserted to said pitched cavity is, according to at least one embodiment, a flow adjustment screw (20), that is connected to the piston (17) on one end and a flow adjustment means (19) on the other end outside the valve body (11). In an embodiment, said flow adjustment means (19) is a wheel.

According to an embodiment, said flow adjustment screw (20) moving the piston (17) in said plug (13) is fixed with a gasket (22) on the remaining outer protruding part of said plug (13), a portion of the cavity of which is not pitched and considerably wider. Space between said wider cavity portion and the body of said flow adjustment screw (20) is accommodated with said gasket (22), on top of which a gasket nut (23) is attached to prevent leakage. Thus, a mechanism comprising two different independently rotatable structures is formed. Said two different structures as sections of said valve are flow adjustment screw (20) rotatable with the flow adjustment means (19) and the plug (13) of said valve rotatable with the plug rotation means (21).

According to an embodiment of the disclosed invention, a 180-degree controllable bidirectional check valve (10) comprising a valve body (11) with a two-level fluid passageway, housing a rotatable clapper body (13) and a piston (17) drivably positioned within said rotatable clapper body (13) is proposed.

According to another embodiment of the disclosed invention, said rotatable clapper body (13) further comprises a two-chambered cavity to establish connection with opposite ends of said two-level fluid passageway of said valve body (11).

According to still another embodiment of the disclosed invention, said piston (17) further comprises at least one cavity whereby fluid delivery between said two levels of the passageway is facilitated or cut off upon vertical actuation of said piston (17).

According to another embodiment of the disclosed invention, said rotatable clapper body (13) comprises an upper portion (13a) and a lower portion (13b).

According to another embodiment of the disclosed invention, said upper portion (13a) and lower portion (13b) further comprise chambers with openings facing opposite directions.

According to another embodiment of the disclosed invention, said rotatable clapper body (13) comprises a cavity between said lower portion (13b) and said upper portion (13a) thereof for said piston (17) to fit comfortably and rotatably therein.

According to another embodiment of the disclosed invention, said upper portion (13a) comprises a piston spring (18) between upper surface of the chamber and top surface of said piston (17), whereby a closed position of said piston is reinforced.

According to another embodiment of the disclosed invention, said bidirectional check valve (10) further comprises a plug rotation means (21) to rotate said rotatable clapper body (13).

According to another embodiment of the disclosed invention, said bidirectional check valve (10) further comprises a flow adjustment means (19) to rotate said piston (17).

## Claims

1. A 180-degree controllable bidirectional check valve (10) comprising a valve body (11) with a two-level fluid passageway, housing a rotatable clapper body (13) and a piston (17) drivably positioned within said rotatable clapper body (13) **characterized in that;**
said rotatable clapper body (13) further comprises a two-chambered cavity to establish connection with opposite ends of said two-level fluid passageway of said valve body (11); and,
said piston (17) further comprises at least one cavity preferably in the form of bore whereby fluid delivery between said two levels of the passageway is facilitated or cut off upon vertical actuation of said piston (17).

2. A 180-degree controllable bidirectional check valve (10) as set forth in Claim 1 **characterized in that** said rotatable clapper body (13) comprises an upper portion (13a) and a lower portion (13b).

3. A 180-degree controllable bidirectional check valve (10) as set forth in Claims 1 and 2 **characterized in that** said upper portion (13a) and lower portion (13b) further comprise chambers with openings facing opposite directions.

4. A 180-degree controllable bidirectional check valve (10) as set forth in any preceding Claim **characterized in that** said rotatable clapper body (13) comprises a cavity between said lower portion (13b) and said upper portion (13a) thereof for said piston (17) to fit comfortably and rotatably therein.

5. A 180-degree controllable bidirectional check valve (10) as set forth in any preceding Claim **characterized in that** said upper portion (13a) comprises a piston spring (18) between upper surface of the chamber and top surface of said piston (17), whereby a closed position of said piston is reinforced.

6. A 180-degree controllable bidirectional check valve (10) as set forth in any preceding Claim **characterized in that** said bidirectional check valve (10) further comprises a plug rotation means (21) to rotate said rotatable clapper body (13).

7. A 180-degree controllable bidirectional check valve (10) as set forth in any preceding Claim **characterized in that** said bidirectional check valve (10) further comprises a flow adjustment means (19) to rotate said piston (17).
